# EUROPEAN PATENT SPECIFICATION

(11) **EP 0 768 486 B1**
(45) Date of publication and mention of the grant of the patent: **18.04.2001**
(21) Application number: 96307265.7
(22) Date of filing: 04.10.1996
(51) Int. Cl.: F16K 24/04, F16K 24/00, F16K 7/17

(54) **Pilot operated fluid valve**
Vorgesteuertes Fluidumventil
Valve pilotée

(30) Priority: 12.10.1995 IL 11558695
(43) Date of publication of application: 16.04.1997
(73) Proprietor: A.R.I. Kfar Charuv, Ramat Hagolan 12932 (IL)
(72) Inventor: Katzman, Yuval, Zichron Yaacov 30900 (IL)
(74) Representative: Molyneaux, Martyn William

(56) References cited:
- DE-A- 2 042 327
- US-A- 3 055 629
- US-A- 4 770 201
- US-A- 5 449 018

## Description

### FIELD OF THE INVENTION

The present invention is in the field of fluid flow valves and is particularly, but not exclusively, concerned with such valves which are designed to serve as gas discharge valves or gas purge valves.

### BACKGROUND OF THE INVENTION

Such air purge valves are installed in liquid systems such as, for example, water mains distribution lines or sewage collection systems, or liquid tanks, and are designed to discharge air (typically in water supply systems) or other gasses (e.g. in sewage systems), thus avoiding the formation of gas pockets and gas bubbles which interfere with the liquid flow and also have bad influence on accessories fitted to the liquid system.

Several types of air purge valves are known. According to one type, disclosed for example in US Patent No. 4,770,201, there is a housing having a fluid through-flow aperture with a valve seating formed in the housing and bounding said aperture. A flexible closure membrane is secured at one end to the housing and is adapted to be biased, under fluid pressure in the housing, against the valve seating so as to seal the aperture. Membrane displacing means are secured to an opposite end of the membrane so that displacement of the displacing means in a first sense progressively detaches successive transverse portions of the membrane from the seating so as to open the aperture while displacement of the displacing means in an opposite sense allows for the membrane to become sealingly biased against the seating.

This type of air purge valve is known as the *"automatic kind"* in which in view of the relatively small dimensions of the aperture, the valve cannot cope with the situation when large quantities of air have to be discharged, wherein not all the air is released and some of it passes into the line, causing build-up of air pressure and ultimately the creation of an air lock.

A second type of air purge valves typically comprises a spherical float located in a housing which is coupled at a lower end thereof to the system to be vented and is provided at its upper end with a venting aperture. When fluid is introduced into a liquid system comprising such a valve, large amounts of air may be discharged via the venting aperture, while in the course of normal operation with the flow of liquid through the system, the housing fills with liquid and the spherical float is forced upwardly against the outlet aperture, sealing the same. When the liquid system is being drained, the float is displaced downwardly under its own weight thereby opening the outlet aperture with consequent venting of the system.

In this type of air purge valve, so-called *"kinetic valve",* the valve has a relatively large aperture through which large quantities of air can be rapidly and effectively vented. However, with such a kinetic valve, once the housing thereof has filled with liquid and the float has been pressed against the large aperture so as to seal it, the valve will only reopen once the pressure in the housing has dropped to atmospheric pressure and, in consequence the kinetic valve cannot be used for the continuous relief of small amounts of air. Moreover, such air purge valves have the drawback of being substantially sensitive, where dirt, tolerances of manufacture dimensions or due to erosion of various components, etc., have great influence on the behavior of the float and its response to changes of the fluid flowing therethrough (liquid or gas), thus performances of such air purge valves are somewhat inaccurate and may malfunction.

Another drawback of such air purge valves is that they tend to cause so-called *"hammering"* in the liquid system wherein the system undergoes pressure shocks.

Even more so, such air purge valves are substantially bulky, heavy and expensive.

US-A-5449018, which forms a basis for the preamble of claim 1, discloses a flow control valve having a housing, an inlet to the housing for connecting to a liquid system to be purged, a flexible diaphragm maintained in the housing serving to divide the housing into first and second chambers, the first chamber communicating with the inlet. An aperture of restricted dimensions is formed in the diaphragm and a diaphragm seating is formed in the first chamber which is engagable by the diaphragm.

It is therefore an object of the present invention to provide a new and improved gas purge valve, substantially overcoming the above drawbacks.

### SUMMARY OF THE INVENTION

According to the present invention, there is provided a gas purge valve comprising a housing; an inlet to said housing for connecting to a liquid system to be purged; a flexible diaphragm maintained in said housing and serving to divide it into first and second chambers; said first chamber communicating with said inlet; an aperture of restricted dimensions formed in said diaphragm; a diaphragm seating formed in said first chamber and engageable by said diaphragm; characterised by a pilot valve controlled first outlet formed in said second chamber; a second outlet formed in said first chamber, said second outlet being sealed when said diaphragm engages said diaphragm seating; the arrangement being such that said pilot valve is displaceable between a first position in which gas is discharged from said second chamber so as to vent the second chamber and a second position in response to liquid presence, so as to seal said first outlet; whilst said diaphragm is displaceable in response to differential pressure created by said venting into unsealing said second outlet for full venting of said first chamber.

Preferably, said diaphragm seating is annular and said diaphragm is essentially circular with its perimeter flanged between the first and second chambers being clamped to one another and said diaphragm is normally biassed against said diaphragm seating.

In still a preferred embodiment, the pilot valve comprises an inlet and an outlet which are substantially circular openings and a spherical float member floatingly displaceable between said inlet and outlet openings; said openings having a diameter smaller than the diameter of said spherical float member, wherein said float member sealingly engages at least said outlet opening.

In order to obtain best results, the aperture of said diaphragm is smaller than said first outlet of said second chamber and said second outlet is essentially bigger than said first outlet.

In accordance with another embodiment of the present invention, the valve may be used for preventing collapse of the liquid system when it is being drained. For this purpose said float member sealingly engages also the inlet opening of said pilot valve so as to prevent gas flow into the housing during draining said liquid system, thus resulting in pressure decrease in both said first and second chambers, entailing disposition of the diaphragm from its normally sealing position to an unsealing position, allowing venting of the liquid system.

According to still another embodiment of the present invention, the size of said aperture's section area at the diaphragm's sealing position is smaller than at an unsealing position, thereby changing the flow behavior so that on the one hand, displacement motion of the diaphragm from the unsealing position slows down towards the sealing position. The size of said aperture's section area is variable by an interposing member comprising a stem projecting towards said aperture and coaxial with said aperture; at least at the sealing position of the diaphragm a portion of the stem is encircled by the aperture; said stem having different cross sections along its longitudinal axis.

In a preferred embodiment, said stem projects from a top surface of the second chamber and has a wider cross-section at a bottom end thereof extending adjacent said aperture at the sealing position of said diaphragm. The stem may be displaceable along its longitudinal axis by a manually operated handle. For specific applications, a stem having a conical or exponential or stepped profile is suitable.

In accordance with further embodiments of the present invention, the gas purge valve may further comprise additional accessories such as a liquid relief valve for discharging liquid at high pressure above a predetermined pressure threshold, an automatic gas purge valve for discharging substantially small amounts of gas, a liquid indicator for indicating the presence of liquid in the liquid system, etc. Either of these accessories may be positioned in either the first or second chamber. In a specific embodiment, said pilot valve may be an automatic gas purge valve.

The gas purge valve may further comprise a fluid flow control assembly comprising a sealing valve mounted on a stem movable with respect to a fixed sealing valve seat within the first chamber of the housing, between an open position and a closed position.

### BRIEF DESCRIPTION OF THE DRAWINGS

For better understanding, the invention will now be described, by way of example only, with reference to the accompanying drawings in which:
**Fig. 1** is a longitudinal sectioned elevation of a gas purge valve in accordance with the present invention, the diaphragm shown in its sealing position;
**Fig. 2** is a longitudinal sectioned elevation of a gas purge valve in accordance with the present invention, the diaphragm shown in an unsealing position;
**Fig. 3** is a longitudinal cross-section of the gas purge valve according to the present invention, shown in a position full with liquid;
**Fig. 4** is a longitudinal sectioned elevation of a further embodiment of a gas purge valve according to the present invention shown in a venting position;
**Fig. 5** is the gas purge valve as in Fig. 1 further comprising an automatic gas purge valve and a liquid relief valve;
**Fig. 6** is a longitudinal cross-sectioned elevation of a gas purge valve according to the present invention comprising a flow behavior controller;
**Fig. 7** is a longitudinal cross-sectioned elevation of a gas purge valve according to the present invention illustrating a further embodiment of the flow behavior controller;
**Fig. 8** is a longitudinal cross-sectioned elevation of a gas purge valve according to the present invention illustrating diaphragm biasing means;
**Fig. 9** is a longitudinal cross-sectional elevation of another embodiment of a gas purge valve according to the present invention, comprising a liquid flow control faucet.
**Fig. 10** is a longitudinal cross-sectioned elevation of a gas purge valve according to the present invention showing a first embodiment of a liquid indication means; and
**Fig. 11** is a longitudinal cross-sectioned elevation of a gas purge valve according to the present invention illustrating a further embodiment of a liquid indication means.

### DETAILED DESCRIPTION OF SPECIFIC EMBODIMENTS

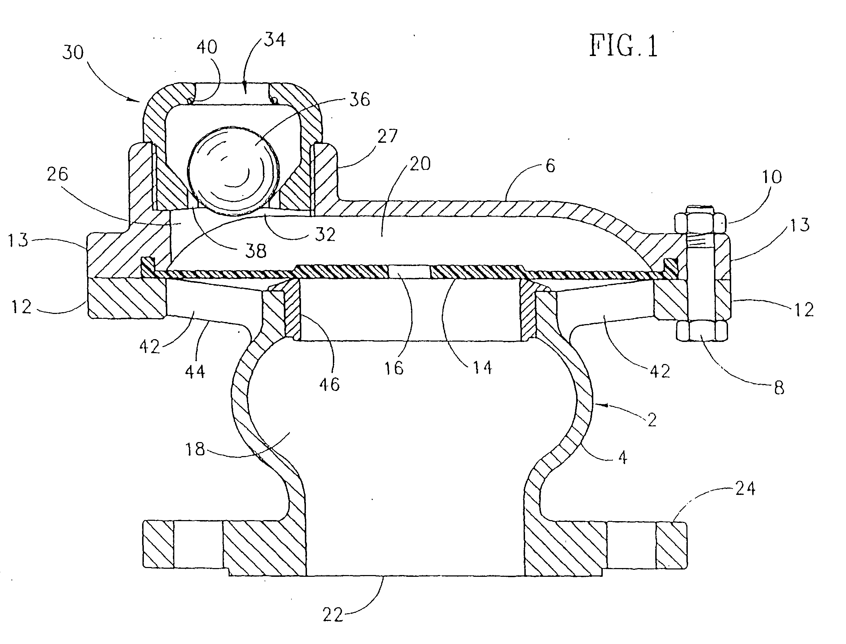

Referring first to Fig. 1 of the drawings, there is seen a gas purge valve comprising a two-piece housing **2** consisting of a lower portion **4** and an upper portion **6**, which are screw-clamped together by bolts **8** and nuts **10** at their joining peripheral flanges **12** and **13.**

A diaphragm **14** made of a flexible material such as, for example, rubber or silicone, is clamped between the adjoining flanges **12.** The diaphragm **14** has a substantially circular central aperture **16** and it divides the housing **2** into a first chamber **18** and a second chamber **20** at the bottom and top portions, respectively.

The first chamber **18** has at its lower end an inlet opening **22** with a flanged end **24** for connecting to a liquid system such as a mains water distribution line or a sewage system (not shown).

The second chamber **20**has a first outlet **26** with an internally screw-tapped boss **27** to which is screw-fitted a pilot valve assembly generally designated **30** and comprising an inlet **32** communicating with said outlet **26**, and an outlet **34** of essentially similar dimensions as of inlet **32.**

A sphere-like float member **36** is displaceable between a lower position in which it rests on support ribs **38** at the inlet **32**, allowing fluid flow between the ribs **38**, and between an upper position in which it sealingly bears against an "*O*"-ring **40** accommodated at the circular outlet **34.**

A second outlet **42** is formed near a top end of the lower portion **4**, reinforced by ribs **44** and bound by an annular diaphragm seating **46,** providing a seat for the diaphragm **14** and ensuring sealing of the outlet **42** by said diaphragm.

It should be noted, that the cross-section area of the aperture **16** is substantially smaller than that of the inlet **32** and outlet **34** of the pilot valve **30**.

At the position shown in Fig. 1, the gas purge valve is in its so-called *"rest"* position in which no fluid flows in the liquid system.

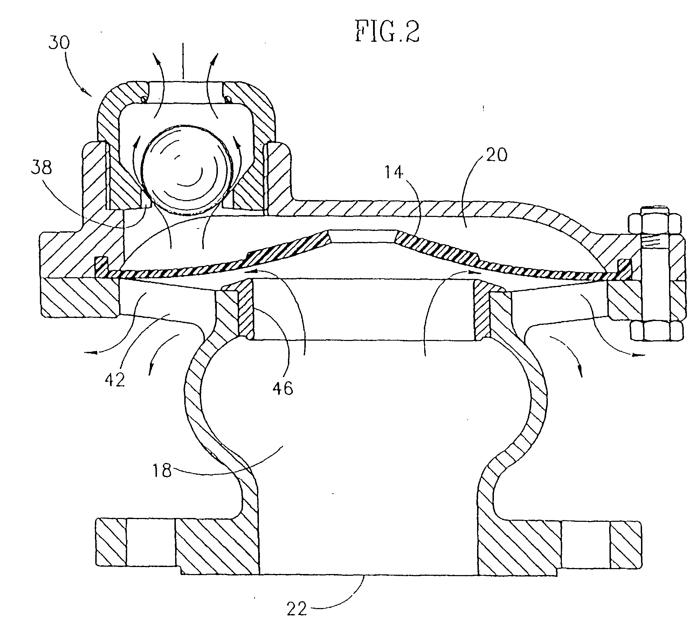

Attention is now directed to Fig. 2 of the drawings illustrating the gas purge valve according to the present invention in its so-called *"open"* or *"un-sealed"* position.

This position occurs, for example, when the mains liquid supply line is being filled with liquid, wherein air (or other gasses in case of a sewage collection system) enters the valve via inlet **22** of the housing. In this position, air is pressurized at the top chamber **20** to above external atmospheric pressure and thus exits through the pilot valve **30** via gaps between the ribs **38,** resulting in pressure decrease in chamber **20** with respect to chamber **18**, in consequence of which the flexible diaphragm **14** raises and thus disengages the diaphragm seating **46**, unsealing the outlet **42** and enabling massive air discharge therethrough.

However, as soon as forces acting on both faces of the diaphragm **14** come to equilibrium, the diaphragm returns to its original position in which it rests over the diaphragm seating **46** sealing the second outlet **42,** (as seen in Fig. 1).

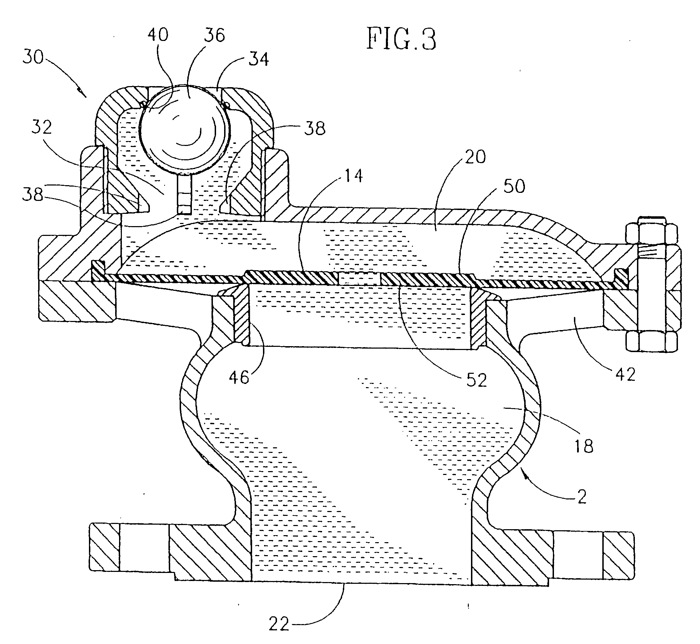

When, however, liquid fills the system, as can be seen in Fig. 3, it enters the gas purge valve through inlet **22**, fills the first chamber **18** and gradually also the second chamber **20** while expelling small amounts of air (or gas) which is discharged via the pilot valve **30** as hereinabove explained.

When the liquid reaches the outlet **32,** the buoyancy forces acting on the float member **36** overcome the gravity force, entailing displacement of the float member **36** to its sealing position, in which it sealingly bears against the "*O*"-ring **40,** thus preventing liquid discharge via the outlet **34.**

In this position, the force acting on the top surface **50** of diaphragm **14** is substantially bigger than that acting on its lower surface **52**, thus ensuring that the diaphragm maintains its sealing position, preventing liquid discharge through the outlet **42.**

It should be realized that the diaphragm **14** may be normally biassed against said diaphragm seating **46** or may be in slack contact with the seating, whereby higher liquid pressure shall be required to cause sealing of the outlet **42.**

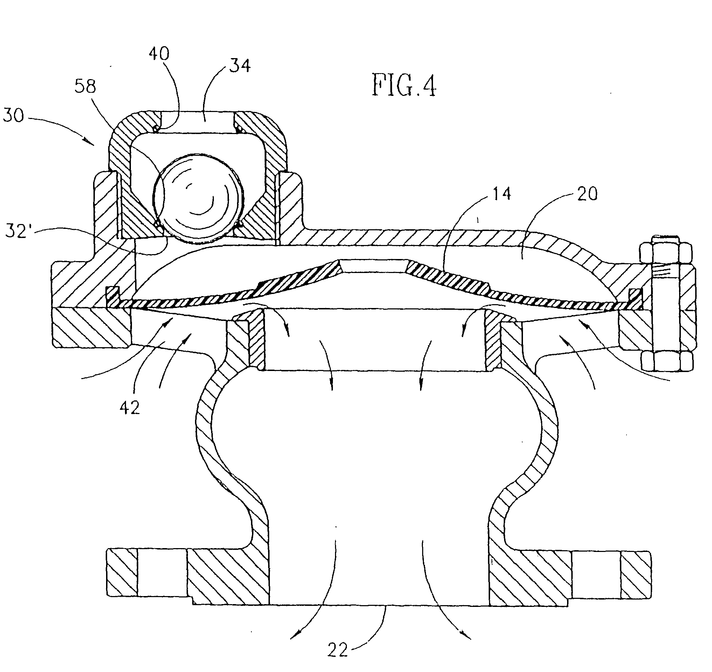

The valve according to the present invention is suitable also for venting a liquid system being drained, so as to prevent collapsing of its walls and accessory members under vacuum. For explaining how the present invention may be used for this purpose, further attention is directed to Fig. 4 of the drawings.

The inlet opening **32** of the pilot valve **30** is a continues circular opening and comprises an "*O*"-ring for sealing engagement with the float member **36** when the latter is in its lowermost position, wherein air is prevented from entering the gas purge valve.

According to the arrangement of this embodiment, when the liquid system is drained, liquid evacuates the housing **2** causing pressure decrease within the housing **2**. Since the pressure within the housing is substantially lower than the external, atmospheric pressure, and since air cannot enter the top chamber **20** via the pilot valve **30,** the external air at atmospheric pressure pushes the diaphragm **14** to its unsealing position and enters via opening **42,** thus venting the liquid system, preventing it from collapsing.

According to a specific embodiment, rather than using "*O*"-rings **40** and **58**, the float member **36** may be itself coated with a resilient material so as to sealingly engage the circular inlet **32'** or outlet **34** as may be the case.

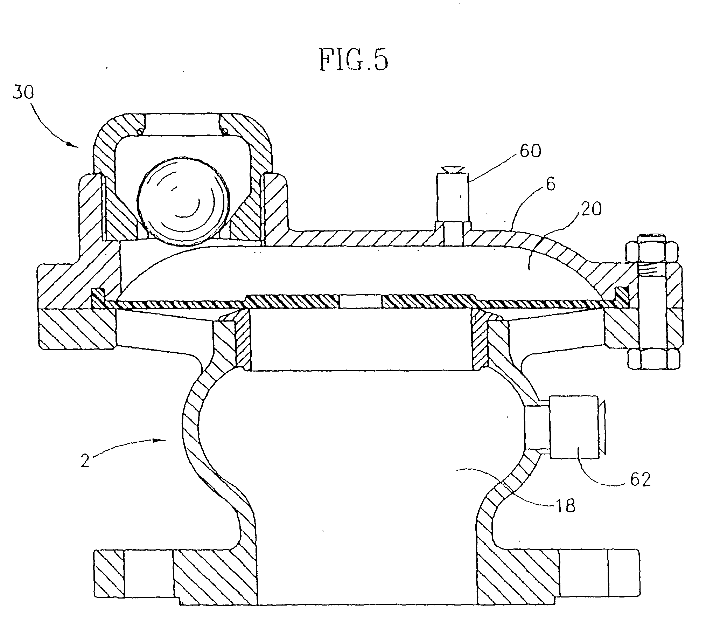

In Fig. 5 of the drawings, there is illustrated a gas purge valve according to the present invention on which an automatic air purge valve **60** (schematically illustrated) is mounted on the upper portion **6** of the housing **2**. Such an automatic air purge valve is in particular suitable for discharging substantially small amounts of gas (regardless of its pressure) and is disclosed, for example, in U.S. Patent No. 4,770,201, incorporated herein by reference.

It should be understood that such an automatic gas purge valve may be installed in addition to the pilot valve **30** or instead, as it is also suitable as a pilot valve.

Furthermore, the automatic gas purge valve may be positioned so as to discharge gas either from the top chamber **20** as seen in Fig. 5 or, from the bottom chamber **18** (not illustrated).

Further seen in Fig. 5, the gas purge valve may incorporate an integral liquid relief valve **62** (schematically illustrated), the purpose of which is to discharge liquid from the housing at a pressure above a predetermined threshold, as known *per se.*

In an ideal gas purge valve, the diaphragm slowly ends its displacement towards the sealing position, so as to prevent shock waves known as *"hammering"* in the liquid system.

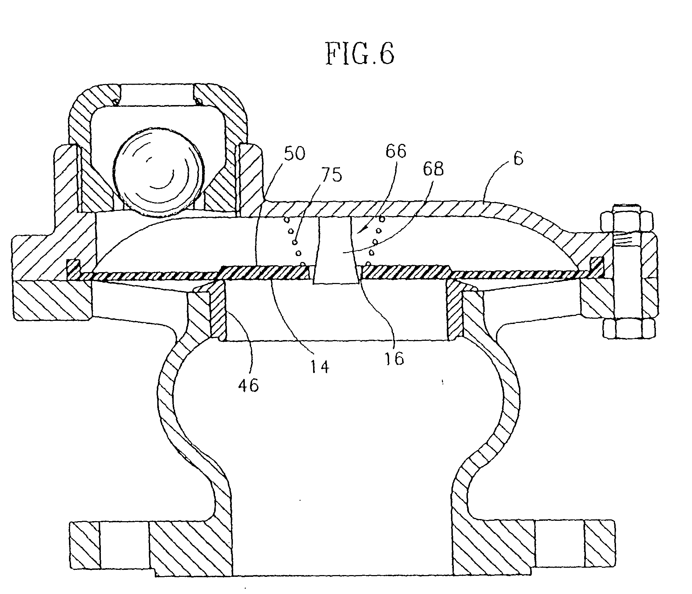

Obtaining such characters may be by a flow behavior regulator **66** as seen in Fig. 6 of the drawings, in which such a regulator comprises a stem **68** projecting downwardly from the upper portion **6** and penetrating into the opening **16** of the diaphragm **14**.

In the application seen in Fig. 6, the stem **68** has at its lower portion a tapering cross-section which ensures that the cross-section area of aperture **16** is minimal at the sealing position and it increases towards the unsealing position, as can readily be understood.

It should be obvious to a person versed in the art that the longitudinal cross-section of the stem may alternatively be exponential or stepped, etc. in accordance with specific flow behavior requirements.

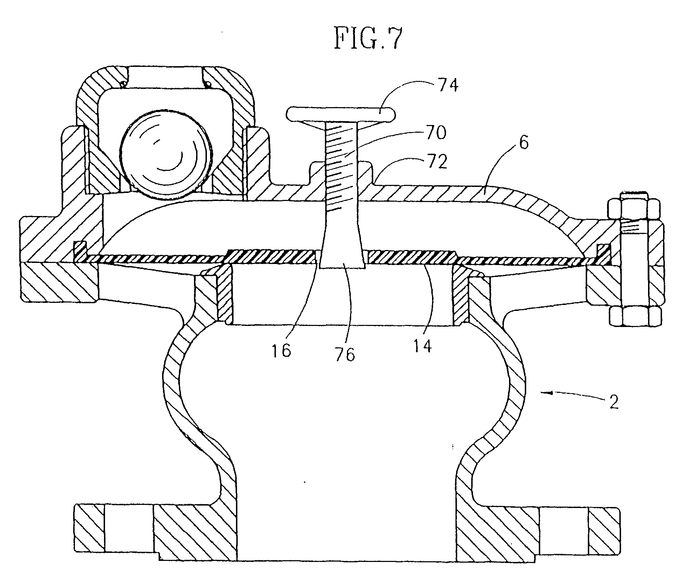

Fig. 7 of the drawings illustrates a screw-threaded shaft **70** rotatably mounted within an internally threaded boss **72** at the top portion of the housing **2**, with a handle **74** for rotating the shaft **70** so as to axially displace it with respect to the aperture **16** of diaphragm **14,** thus elevating or lowering the tapering end portion **76** of the shaft **70** as can be appreciated, for obtaining different flow characters of fluid flow through the aperture **16.**

Also seen in Fig. 6, there is shown a conical compression spring **75** having one end thereof bearing against a top wall of the housing and an opposed end bearing against the top surface **50** of the diaphragm **14**, whereby said diaphragm is biased against the diaphragm seating **46** into the sealing position.

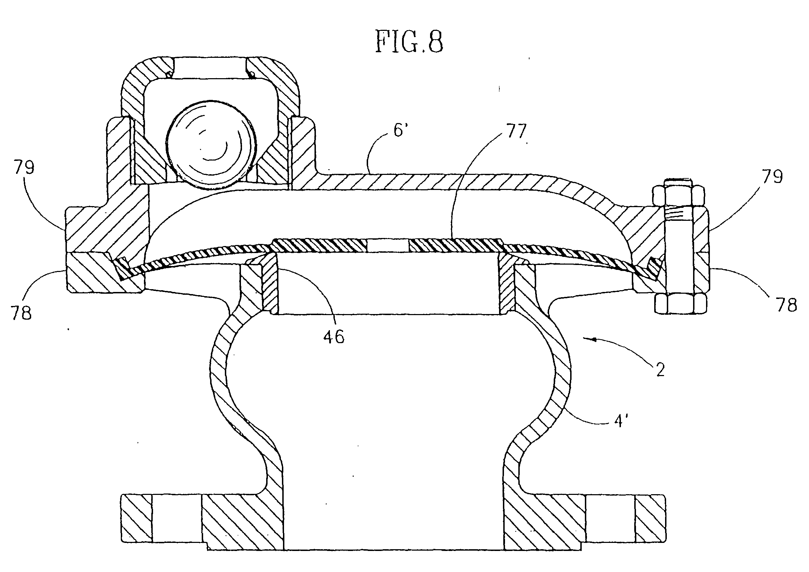

In Fig. 8 of the drawings the diaphragm **77** is pre-stressed over the diaphragm seating **46,** with its peripheral portion clamped between adjacent flange portions **78** and **79** of the lower portion **4'** and the upper portion **6'** of the housing **2**, whereby the diaphragm **77** is biased into the sealing position and where a higher preliminary force is required to shift the diaphragm into the unsealing position.

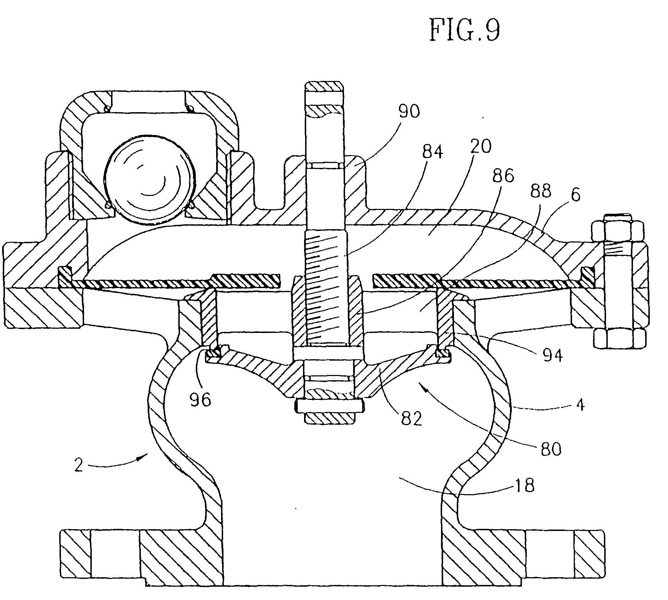

Fig. 9 of the drawings is another embodiment of the present invention in which the gas purge valve is integrally provided with a fluid flow control assembly, namely a faucet, generally designated **80** comprising a valve member **82** linked to a screw-threaded stem **84** adapted for axial displacement within a corresponding screw-threaded bushing **86** fixed to the bottom portion **4** of the housing **2** by radial ribs **88**. The stem **84** is rotatably supported by a boss **90** at the top portion **6** of the housing **2** and is rotatable by a handle (not shown) so as to axially displace the valve member **82** with respect to an annular valve seat **94**. The valve **82** comprises adjacent its perimeter a seal **96** adapted for engaging with the valve seat **94**.

In Fig. 9 the fluid faucet **80** is seen in a closed position in which the valve **82** sealingly engages the valve seat **94**, whereby liquid passage between the bottom chamber **18** and the top chamber **20** is prevented. This situation is useful for servicing the gas purge valve, e.g. cleaning, repairing, etc.

As can be appreciated, rotating the stem (by a handle - not shown) entails disengagement of the valve **82** from the valve seat **94**, whereby the gas purge valve may return to normal operation.

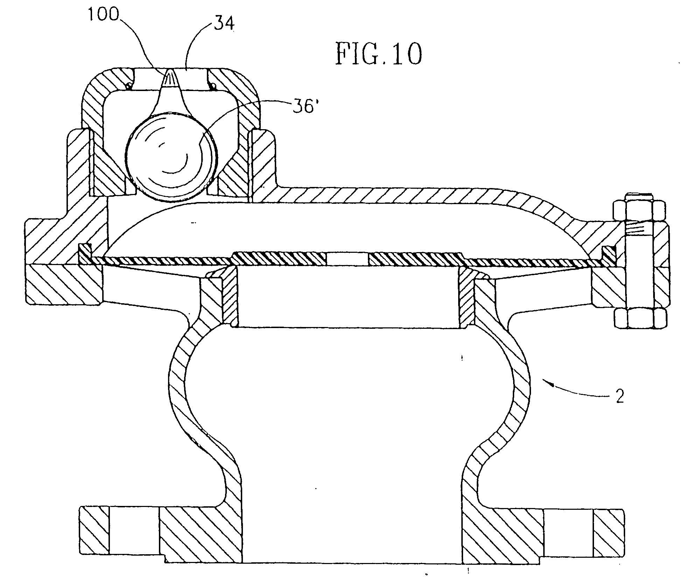

In Fig. 10 of the drawings a flag member **100** is attached to the float member **36'** and is adapted to project from the outlet opening **34** of the pilot valve **30**. the arrangement is such that at the presence of liquid within the upper chamber **20,** the float member **34'** moves upward with the flag member **100** projecting from the housing **2**, indicating the presence of liquid.

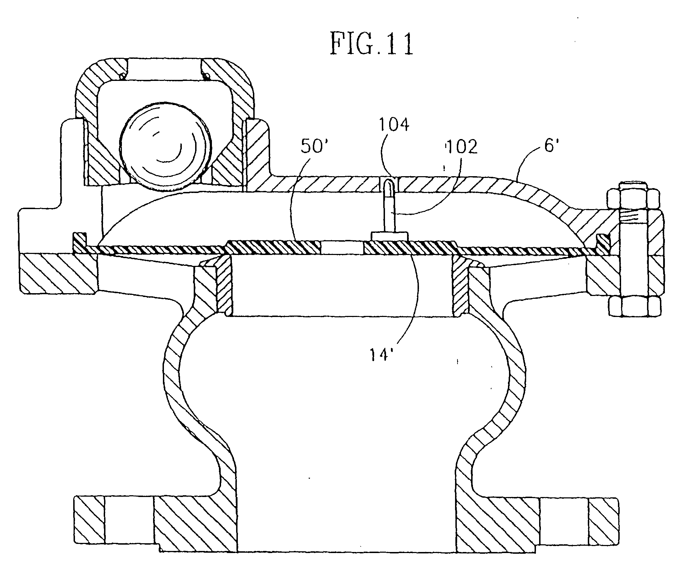

Fig. 11 illustrates another embodiment of a liquid indicator where a flag member **102** is attached to the top surface **50'** of the diaphragm **14'.** The flag member **102** is adapted for projecting through an aperture **104** at the upper portion **6**', whereby at the absence of liquid within the valve said flag member projects from the housing , while at the presence of liquid within the valve, the flag member is retracted as shown in Fig. 11.

It should be obvious to a person versed in the art that the gas purge valve according to the present invention may comprise any of the above-mentioned accessories, e.g. automatic gas purge valve, liquid relief valve, liquid flow regulator, fluid indicator, liquid flow control assembly, etc. at any required combination.

## Claims

1. A gas purge valve comprising a housing (2); an inlet (22) to said housing (2) for connecting to a liquid system to be purged; a flexible diaphragm (14) maintained in said housing (2) and serving to divide it into first (18) and second (20) chambers; said first chamber (18) communicating with said inlet (22); an aperture (16) of restricted dimensions formed in said diaphragm (14); a diaphragm seating (46) formed in said first chamber (18) and engageable by said diaphragm (14); characterised by a pilot valve (30) controlled first outlet (26) formed in said second chamber (20); a second outlet (42) formed in said first chamber (18), said second outlet being sealed when said diaphragm (14) engages said diaphragm seating (46); the arrangement being such that said pilot valve (30) is displaceable between a first position in which gas is discharged from said second chamber (20) so as to vent the second chamber and a second position in response to liquid presence, so as to seal said first outlet (26); whilst said diaphragm (14) is displaceable in response to differential pressure created by said venting into unsealing said second outlet (42) for full venting of said first chamber.

2. A gas purge valve according to claim 1, wherein said diaphragm (14) is normally biassed against said diaphragm seating (46).

3. A gas purge valve according to claim 1, wherein said diaphragm seating (46) is annular and said diaphragm (14) is essentially circular with its perimeter flanged between the first and second chambers being clamped to one another.

4. A gas purge valve according to claim 1, wherein the pilot valve 30 comprises an inlet (32) and an outlet (34) which are substantially circular openings and a spherical float member (36) floatingly displaceable between said inlet and outlet openings; said openings having a diameter smaller than the diameter of said spherical float member (36), wherein said float member is adapted for sealing engagement of at least said outlet opening (34).

5. A gas purge valve according to claim 4, wherein said float member (36)is coated with an elastic material.

6. A gas purge valve according to claim 1, wherein the aperture (16) of said diaphragm (14) is smaller than said the first outlet (26) of said second chamber (20), and said second outlet (44) is essentially bigger than said first outlet (26).

7. A gas purge valve according to claim 4, wherein said float member (36) sealingly engages also the inlet opening (32) of said pilot valve (30) so as to prevent gas flow into the housing (2), wherein draining said liquid system results in pressure decrease in both said first and second chambers (18, 20), entailing disposition of the diaphragm (14) from the normally sealing position to an unsealing position, allowing venting of the liquid system.

8. A gas purge valve according to claim 1, wherein the size of said aperture's section area at the diaphragm's sealing position is smaller than at an unsealing position, thereby changing the flow behavior so that on the one hand displacement motion of the diaphragm (14) from the unsealing position slows down towards the sealing position.

9. A gas purge valve according to claim 8, wherein the size of said aperture's section area is variable by an interposing member comprising a stem (68) projecting towards said aperture (16) and coaxial with said aperture; at least in the sealing position of the diaphragm (14) a portion of the stem (68) is encircled by the aperture (16); said stem having different cross sections along its longitudinal axis.

10. A gas purge valve according to claim 9, wherein said stem (68) projects from a top surface of the second chamber (20) and has a wider cross-section at a bottom end thereof extending adjacent said aperture (16) at the sealing position of said diaphragm (14).

11. A gas purge valve according to claim 10, wherein the cross-section of said stem (68) is conical or exponential or has a stepped configuration.

12. A gas purge valve according to claim 10, wherein the stem (68) is externally displaceable along its longitudinal axis by a manually operated handle (74).

13. A gas purge valve according to claim 1, wherein said housing (2) further comprises a liquid relief valve (62) for discharging liquid at high pressure above a predetermined pressure threshold; said liquid relief valve (62) positioned in either the first or second chamber (18, 20).

14. A gas purge valve according to claim 1, wherein the housing (2) further comprises an automatic gas purge valve (60) for discharging substantially small amounts of gas; said gas purge valve (60) connected to either the first chamber (18) or the second chamber (20).

15. A gas purge valve according to claim 1 or 14, wherein said pilot valve (30) is a gas purge valve.

16. A gas purge valve according to claim 1, wherein said valve further comprises a liquid indicator (102) for indicating the presence of liquid in the liquid system.

17. A gas purge valve according to claim 16, wherein said liquid indicator consists of a retractable flag member (100) associated with a float member (36') of said pilot valve, which flag member projects from the housing in response to liquid presence within said second chamber.

18. A gas purge valve according to claim 16, wherein said liquid indicator consists of a retractable flag member associated with the diaphragm (14'), whereby at the absence of liquid within the housing said flag member (102) projects from said housing.

19. A gas purge valve according to claim 1, wherein said valve further comprises a fluid flow control assembly (80) comprising a sealing valve (82) mounted on a stem (84) movable with respect to a fixed sealing valve seat (94) within the first chamber (18) of the housing (2), between an open position and a closed position.

20. A gas purge valve according to claim 9 or 19, wherein said interposing member (76) and said fluid flow control assembly (80) have a common stem (84).

21. A gas purge valve according to claim 2, comprising a spring member for biasing said diaphragm.

22. A gas purge valve according to claim 2, wherein said diaphragm (14) is pre-stressed over said diaphragm seating (46).

## Patentansprüche

1. Gas-Ablassventil, aufweisend: ein Gehäuse (2): einen Einlass (22) zu dem Gehäuse (2) zum Anschließen an ein Flüssigkeitssystem, das entgast werden soll; eine flexible Scheidewand (14), die in dem Gehäuse (2) gehalten wird und dazu dient, dieses in erste (18) und zweite (20) Kammern zu unterteilen, wobei die erste Kammer (18) mit dem Einlass (22) in kommunizierender Verbindung steht; eine in dieser Scheidewand (14) ausgebildete Öffnung (16) mit beschränkten Abmessungen; eine Scheidewandauflage (46), die in der ersten Kammer (18) ausgebildet ist und von der Scheidewand (14) überdeckbar ist, gekennzeichnet durch ein mit Vorsteuerventil (30) gesteuerten ersten Auslass (26), der in der zweiten Kammer (20) ausgebildet ist; einen zweiten Auslass (42), der in der ersten Kammer (18) ausgebildet ist, wobei der zweite Auslass geschlossen wird, wenn die Scheidewand (14) die Scheidewandauflage (46) überdeckt; wobei die Anordnung derart ist, dass das Vorsteuerventil (30) auslenkbar ist zwischen einer ersten Stellung, in der Gas aus der zweiten Kammer (20) abgelassen wird, um die zweite Kammer zu entlüften, und einer zweiten Stellung in Reaktion auf das Vorhandensein von Flüssigkeit, so dass der erste Auslass (26) geschlossen wird, während die Scheidewand (14) auslenkbar ist in Reaktion auf den Differentialdruck, der erzeugt wird durch das Entlüften in das Öffnen des zweiten Auslasses (42) für ein volles Entlüften der ersten Kammer.

2. Gas-Ablassventil nach Anspruch 1, bei welchem die Scheidewand (14) normalerweise gegen die Scheidewandauflage (46) vorbelastet ist.

3. Gas-Ablassventil nach Anspruch 1, bei welchem die Scheidewandauflage (46) ringförmig ist und die Scheidewand (14) im wesentlichen kreisförmig ist mit ihrem Umfang angeflanscht zwischen der ersten und der zweiten Kammer, die miteinander festgespannt sind.

4. Gas-Ablassventil nach Anspruch 1, bei welchem das Vorsteuerventil (30) einen Einlass (32) und einen Auslass (34) aufweist. die im wesentlichen kreisförmige Öffnungen sind, sowie einen kugelförmigen Schwimmerkörper (36), der zwischen den Einlass- und Auslassöffnungen schwimmend verstellbar ist, wobei die Öffnungen einen Durchmesser haben, der kleiner ist als der Durchmesser des kugelförmigen Schwimmerkörpers (36) und wobei der Schwimmerkörper zur schließenden Überdeckung mindestens der Auslassöffnung (34) ausgelegt ist.

5. Gas-Ablassventil nach Anspruch 4, bei welchem der Schwimmerkörper (36) mit einem elastischen Material überzogen ist.

6. Gas-Ablassventil nach Anspruch 1, bei welchem die Öffnung (16) der Scheidewand (14) kleiner ist als der erste Auslass (26) der zweiten Kammer (20) und der zweite Auslass (44) wesentlich größer ist als der erste Auslass (26).

7. Gas-Ablassventil nach Anspruch 4, bei welchem der Schwimmerkörper (36) auch die Einlassöffnung (32) des Vorsteuerventils (30) schließend überdeckt, um so Gasströmung in das Gehäuse (2) zu verhindern; wobei ein Entleeren des Flüssigkeitssystems einen Druckabfall sowohl in der ersten als auch in der zweiten Kammer (18, 20) zur Folge hat, was eine Stellungsänderung der Scheidewand (14) von der normalerweise schließenden Stellung zu einer öffnenden Stellung zur Folge hat und ein Entlüften des Flüssigkeitssystems ermöglicht.

8. Gas-Ablassventil nach Anspruch 1, bei welchem die Größe der Querschnittfläche der Öffnung an der schließenden Stellung der Scheidewand kleiner ist als an der öffnenden Stellung, wodurch das Strömungsverhalten derart geändert wird, dass an der einen Seite die Auslenkbewegung der Scheidewand (14) aus der öffnenden Stellung in Richtung auf die schließende Stellung langsamer wird.

9. Gas-Ablassventil nach Anspruch 8, bei welchem die Größe der Querschnittfläche der Öffnung mit Hilfe eines zwischenschaltenden Teils variabel ist. welches Teil einen Schaft (68) aufweist, der in Richtung der Öffnung (16) ragt und mit der Öffnung koaxial ist, wobei mindestens in der schließenden Stellung der Scheidewand (14) ein Abschnitt des Schaftes (68) von der Öffnung (16) umgeben ist und wobei der Schaft entlang seiner Längsachse unterschiedliche Querschnitte hat.

10. Gas-Ablassventil nach Anspruch 9, bei welchem der Schaft (68) von einer Oberseite der zweiten Kammer (20) hervorragt und an seinem unteren Ende einen breiteren Querschnitt hat, das angrenzend an der Öffnung (16) in der schließenden Stellung der Scheidewand (14) verläuft.

11. Gas-Ablassventil nach Anspruch 10, bei welchem der Querschnitt des Schaftes (68) konisch oder exponentiell ist oder eine abgestufte Konfiguration hat.

12. Gas-Ablassventil nach Anspruch 10, bei welchem der Schaft 68) entlang seiner Längsachse mit Hilfe einer manuell betätigten Griffvorrichtung (74) extern verstellbar ist.

13. Gas-Ablassventil nach Anspruch 1, bei welchem das Gehäuse (2) ferner aufweist: ein Flüssigkeitsdruckbegrenzungsventil (62) zum Ablassen von Flüssigkeit bei hohem Druck oberhalb eines vorbestimmten Druckgrenzwertes, wobei das Flüssigkeitsdruckbegrenzungsventil (62) entweder in der ersten oder in der zweiten Kammer (18, 20) angeordnet ist.

14. Gas-Ablassventil nach Anspruch 1, bei welchem das Gehäuse (2) ferner aufweist: ein selbsttätiges Gas-Ablassventil (60) zum Ablassen von im wesentlichen geringen Mengen Gas, wobei das Gas-Ablassventil (60) entweder mit der ersten Kammer (18) oder mit der zweiten Kammer (20) verbunden ist.

15. Gas-Ablassventil nach Anspruch 1 oder 14, bei welchem das Vorsteuerventil (30) ein Gas-Ablassventil ist.

16. Gas-Ablassventil nach Anspruch 1, wobei das Ventil ferner aufweist: eine Flüssigkeitsanzeige (102) zum Anzeigen des Vorhandenseins von Flüssigkeit in dem Flüssigkeitssystem

17. Gas-Ablassventil nach Anspruch 16, bei welchem die Flüssigkeitsanzeige aus einem zurückziehbaren Anzeigeteil (100) in Verbindung mit einem Schwimmerkörper (36') des Vorsteuerventils besteht, wobei das Anzeigeteil in Reaktion auf das Vorhandensein von Flüssigkeit im Inneren der zweiten Kammer von dem Gehäuse hervorsteht.

18. Gas-Ablassventil nach Anspruch 16, bei welchem die Flüssigkeitsanzeige aus einem zurückziehbaren Anzeigeteil in Verbindung mit der Scheidewand (14') besteht, wodurch bei Abwesenheit von Flüssigkeit im Inneren des Gehäuses das Anzeigeteil (102) von dem Gehäuse hervorragt.

19. Gas-Ablassventil nach Anspruch 1, wobei das Ventil ferner eine Anordnung (80) zur Fluidstromregelung aufweist, aufweisend ein schließendes Ventil (82), das auf einem Schaft (84) aufgebaut ist und in bezug auf einen fest angeordneten, schließenden Ventilsitz (94) im Inneren der ersten Kammer (18) des Gehäuses (2) zwischen einer offenen Stellung und einer geschlossenen Stellung beweglich ist.

20. Gas-Ablassventil nach Anspruch 9 oder 19, bei welchem das zwischenschaltende Teil (76) und die Anordnung (80) zur Fluidstromregelung einen gemeinsamen Schaft (84) haben.

21. Gas-Ablassventil nach Anspruch 2, aufweisend ein Federelement zum Vorbelasten der Scheidewand.

22. Gas-Ablassventil nach Anspruch 2, bei welchem die Scheidewand (14) über der Scheidewandauflage (46) vorgespannt ist.

## Revendications

1. Valve de purge de gaz comprenant : un corps (2) ; une entrée (22) au dit corps (2) pour raccordement à un système de liquide à purger ; une membrane souple (14) maintenue dans le dit corps (2) et servant à le diviser en une première (18) et une deuxième (20) chambres ; la dite première chambre (18) communiquant avec la dite entrée (22) ; un orifice (16) de dimensions limitées formé dans la dite membrane (14) ; un siège de membrane (46) formé dans la dite première chambre (18) et avec lequel la dite membrane (14) peut venir en contact; caractérisée par une première sortie (26) commandée par une soupape pilote (30) et formée dans la dite deuxième chambre (20) ; une deuxième sortie (42) formée dans la dite première chambre (18), la dite deuxième sortie étant fermée lorsque la dite membrane (14) est en contact avec le dit siège de membrane (46) ; l'agencement étant tel que la dite soupape pilote (30) est déplaçable entre une première position, dans laquelle le gaz est évacué de la dite deuxième chambre (20) de façon à purger la deuxième chambre, et une deuxième position en réponse à la présence de liquide, de façon à fermer la dite première sortie (26) ; tandis que la dite membrane (14) est déplaçable, en réponse à la pression différentielle créée par la dite purge, à une position d'ouverture de la dite deuxième sortie (42) pour la mise à l'atmosphère complète de la dite première chambre.

2. Valve de purge de gaz selon la revendication 1, dans laquelle la dite membrane (14) est normalement rappelée contre le dit siège de membrane (46).

3. Valve de purge de gaz selon la revendication 1, dans laquelle le dit siège de membrane (46) est annulaire et la dite membrane (14) est sensiblement circulaire et son périmètre est inséré entre les première et deuxième chambres qui sont bloquées l'une contre l'autre.

4. Valve de purge de gaz selon la revendication 1, dans laquelle la soupape pilote (30) comprend une entrée (32) et une sortie (34), qui sont des ouvertures sensiblement circulaires, et un flotteur sphérique (36) déplaçable de façon flottante entre les dites ouvertures d'entrée et de sortie, ces ouvertures ayant un diamètre plus petit que le diamètre du dit flotteur sphérique (36), de sorte que le dit flotteur peut venir en contact étanche avec au moins la dite ouverture de sortie (34).

5. Valve de purge de gaz selon la revendication 4, dans laquelle le dit flotteur (36) est revêtu d'une matière élastique.

6. Valve de purge de gaz selon la revendication 1, dans laquelle l'orifice (16) de la dite membrane (14) est plus petit que la dite première sortie (26) de la dite deuxième chambre (20), et la dite deuxième sortie (42) est sensiblement plus grande que la dite première sortie (26).

7. Valve de purge de gaz selon la revendication 4, dans laquelle le dit flotteur (36) vient en contact étanche également avec l'ouverture d'entrée (32) de la dite soupape pilote (30) afin d'empêcher l'entrée de gaz dans le corps (2), de sorte que la vidange du dit système de liquide provoque une diminution de pression à la fois dans les dites première et deuxième chambres (18, 20), ce qui entraîne un déplacement de la membrane (14) de la position normalement fermée à une position soulevée, permettant la mise à l'atmosphère du système de liquide.

8. Valve de purge de gaz selon la revendication 1, dans laquelle la dimension de la section du dit orifice à la position de fermeture de la membrane est plus petite qu'à une position de soulèvement, ce qui modifie le comportement de l'écoulement d'une manière telle que, d'une part, le mouvement de déplacement de la membrane (14) à partir de la position soulevée ralentit vers la position de fermeture.

9. Valve de purge de gaz selon la revendication 8, dans laquelle la dimension de la section du dit orifice est modifiable par un élément d'interposition comprenant une tige (68) qui s'étend vers le dit orifice (16) et est coaxiale au dit orifice ; au moins dans la position de fermeture de la membrane (14), une partie de la tige (68) est entourée par l'orifice (16) ; la dite tige ayant des sections transversales différentes le long de son axe longitudinal.

10. Valve de purge de gaz selon la revendication 9, dans laquelle la dite tige (68) fait saillie à partir d'une surface supérieure de la deuxième chambre (20) et elle a une section transversale plus grande à son extrémité inférieure, adjacente au dit orifice (16) à la position de fermeture de la dite membrane (14).

11. Valve de purge de gaz selon la revendication 10, dans laquelle le profil de la dite tige (68) est conique ou exponentiel ou présente une configuration en gradins.

12. Valve de purge de gaz selon la revendication 10, dans laquelle la tige (68) est déplaçable de l'extérieur le long de son axe longitudinal au moyen d'une manette actionnée manuellement (74).

13. Valve de purge de gaz selon la revendication 1, dans laquelle le dit corps (2) comprend en outre une soupape de décharge de liquide (62) pour la décharge de liquide à haute pression au-dessus d'un seuil de pression prédéterminée, la dite soupape de décharge de liquide (62) étant placée dans la première ou la deuxième chambre (18, 20).

14. Valve de purge de gaz selon la revendication 1, dans laquelle le corps (2) comprend en outre une valve de purge de gaz automatique (60) pour évacuer des quantités sensiblement petites de gaz ; la dite valve de purge de gaz (60) étant connectée à la première chambre (18) ou à la deuxième chambre (20).

15. Valve de purge de gaz selon la revendication 1 ou 14, dans laquelle la dite soupape pilote (30) est une valve de purge de gaz.

16. Valve de purge de gaz selon la revendication 1, dans laquelle la dite valve comprend en outre un indicateur de liquide (102) pour indiquer la présence de liquide dans le système de liquide.

17. Valve de purge de gaz selon la revendication 16, dans laquelle le dit indicateur de liquide consiste en un index rétractable (100) associé à un flotteur (36') de la dite soupape pilote, le dit index faisant saillie hors du corps en réponse à la présence de liquide dans la dite deuxième chambre.

18. Valve de purge de gaz selon la revendication 16, dans laquelle le dit indicateur de liquide consiste en un index rétractable associé à la membrane (14') de sorte que, en l'absence de liquide dans le corps, le dit index (102) fait saillie hors du dit corps.

19. Valve de purge de gaz selon la revendication 1, dans laquelle la dite valve comprend en outre un dispositif de commande d'écoulement de fluide (80) incluant un clapet de fermeture (82) monté sur une tige (84) déplaçable par rapport à un siège de clapet de fermeture fixe (94) à l'intérieur de la première chambre (18) du corps (2), entre une position ouverte et une position fermée.

20. Valve de purge de gaz selon la revendication 9 ou 19, dans laquelle le dit élément d'interposition (76) et le dit dispositif de commande d'écoulement de fluide (80) ont une tige commune (84).

21. Valve de purge de gaz selon la revendication 2, comprenant un élément élastique de rappel de la dite membrane.

22. Valve de purge de gaz selon la revendication 2, dans laquelle la dite membrane (14) est précontrainte sur le dit siège de membrane (46).
